# EUROPEAN PATENT SPECIFICATION

(11) **EP 3 914 485 B1**
(45) Date of publication and mention of the grant of the patent: **15.01.2025**
(21) Application number: 20719236.0
(22) Date of filing: 24.01.2020
(51) Int. Cl.: B60R 22/02

(54) **FOUR POINT SAFETY BELT SYSTEM**
VIERPUNKTSICHERHEITSGURTSYSTEM
SYSTÈME DE CEINTURE DE SÉCURITÉ À QUATRE POINTS

(30) Priority: 25.01.2019 IT 201900001123
(43) Date of publication of application: 01.12.2021
(73) Proprietor: Di Giorgio, Fabio, 20141 Milano (MI) (IT)
(72) Inventor: Di Giorgio, Fabio, 20141 Milano (MI) (IT)
(86) International application number: PCT/IT2020/050008
(87) International publication number: WO 2020/152729

(56) References cited:
- DE-U1- 20 117 172
- US-A- 6 139 111
- US-A1- 2014 265 292
- US-B1- 6 293 588
- US-B2- 7 011 341

## Description

### TECHNICAL FIELD

The safety belts are a device that allows to retain the body of the passengers during a braking and / or a collision, to safeguard their safety.

### BACKGROUND ART

The safety seat belts , today more diffuse, include an only belt with three anchorage points to the frame of the car and an only system of closing composed by a tongue and a buckle.

Two extremes of this belt are anchored in the lower part of the far the central upright of the car, side door.

In the first versions the system was devoid of spring retractors (patent US3043625).

In the present versions the first extremity is placed inside a device called retractor anchored at the base of the upright close to the seat in question. The belt, which is extracted by the retractor, flows for a first stroke inside a vertical protection carter supplemented to the upright, which hides it and protects it.

The retractor re-wraps automatically, thanks to a spring, the belt when it is disconnected, allows freedom of movement to the occupant's bust when the belt is fastened and locks the belt mechanically or mechanically or mechanically pyrotechnically when it is pulled quickly or when the vehicle brakes sharply.

The belt protrudes from a slit in the upper part of the casing and passes through an externally anchored spreader ring above the slot in the upper part of the upright.

The extracted belt integrates a first anchor ring and a second ring, which integrates a tongue. The first ring serves to anchor the end of the belt extracted to the floor. The second ring integrates a closing tab which is inserted into the corresponding buckle. The aforesaid second ring encircles and flows, in both directions, along the extracted belt. The belt then continues its path downwards, next to the carter and reaches the floor where the first anchor ring is anchored to the floor itself with adequate bolts.

To pass from the open configuration to the closed configuration, the tab is pulled by the occupant by extracting additional tape and inserted into the respective buckle anchored to the floor of the car on the opposite side of the seat with respect to the upright.

The belt thus extracted creates a configuration called a sling or a delta that covers the part of the occupant's torso obliquely and the part of the lower abdomen horizontally.

The attachments of the belts anchored to the frame are important because they allow to retain the upper part and the lower part of the body of the tied person, against the inertial force developed during the rapid decrease of speed, regardless of the structural strength of the seat and independently of the strength of the anchorage of the seat itself to the chassis of the vehicle. This type of belt is currently the best compromise between effectiveness in occupant protection and ease of use and installation. Furthermore, it fully respects the regulations concerning the anchorage to the frame of the same. However, their use has revealed some shortcomings.

The real limitation of these containment systems is linked to their geometry. In particular, if on one side the three-point seat belt reduces the potentially fatal injuries, on the other hand it can be the cause of other minor injuries.

The only shoulder immobilized, for example, causes the torsion of the shoulder against the side with the possibility of impact of the latter against the internal structures of the car or against the neighboring occupant when the impact is also partially lateral.

At the same time the lumbar tract may suffer torsional trauma when the upper part of the unprotected shoulder tends to rotate around the axis of the longitudinal belt while the pelvis is blocked by the abdominal belt.

Even the sternum can rarely suffer from trauma. Although the great elasticity and resistance of the rib cage makes fractures of the sternum a relatively rare event, their incidence has increased directly proportional to the increase in trauma of the road. The introduction of seat belts, while globally reducing the severity of traumatic injuries, has in fact paradoxically increased the incidence of sternal fractures.

It is also possible the involvement of the neck and the carotid artery for direct crushing of the vessel by a poorly positioned diagonal belt.

There is another configuration called a four-point because the ends of the belts are anchored in four different points of the frame. Presents, substantially, two belts of the double-shoulder type, each one equipped with a closing tab. They extend from the two shoulders of the occupant, converge along the thorax and join in the center of the sub-abdominal part with a buckle system. Two other horizontal belts, equipped both with tongue or buckle, extends from the occupant's hips and converge horizontally in the middle, covering the sub-abdominal area, and are attached to the aforementioned buckle system.

This totally manual version is particularly used in sports for the greatest safety features. It has no retractors. The length of the belts is adjusted manually and remains unchanged during use.

These features make it uncomfortable and complex in everyday use.

There are also, in the patent literature, versions of four-point belts that adopt retractors.

These versions have not yet been applied in the automotive industry for several reasons:
- present a complex installation;
- require several additional components;
- they do not exploit the predispositions present in the current cars, such as the space for housing the retractors inside the uprights;
- create space problems;
- in many cases, the belts are totally or partially unfastened to the seat, thus failing to comply with the strict regulations governing the subject, which consider the criteria of anchorage to the frame used in the current three-point belts to be essential.

In the following examples, the two systems are currently described more interesting, which adopt the four-point system with the use of retractors.

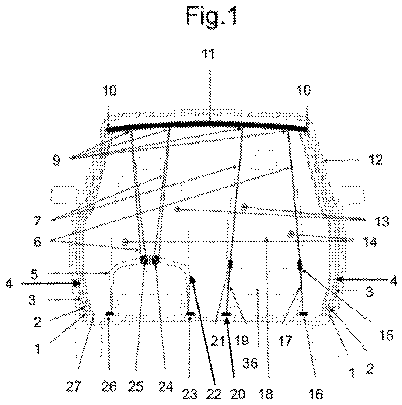

A known safety belt system according to the preamble of claim 1 (patent US6293588B1), has four independent belts with four retractors, two anchored in the reinforced crossbar bar of the car roof and two anchored in the floor on the sides of the seats (fig.1).

The solution is effective but more expensive and complex because it adopts four belts inserted into four separate retractors.

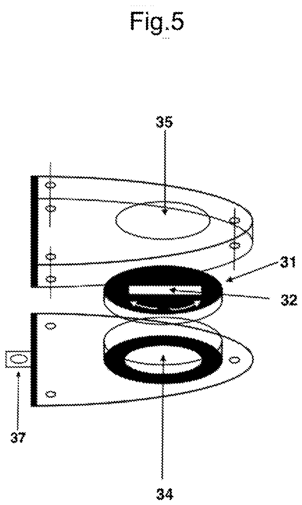

Moreover, the arrangement of the retractors integrated to the crossbar is cumbersome for the rear visibility of the driver and aesthetically unpleasant for the rear passengers. Also the closing system, at abdomen height, is cumbersome and not practical because it has four attachments with a fixed angle of 90 ° between the shoulder belt portion and the abdominal belt portion which does not allow the two elements of the closure device to assume a neat and linear position on the sides of the back when they are disengaged. Another known safety belt system (patent US20080296884A1) has four independent belts with four retractors, two anchored in the crossbar bar of the roof of the car and two anchored in a cross bar placed behind the backrests (fig.5). This solution is also effective but more expensive and complex because it adopts four belts inserted into four separate retractors.

Also the closing system, at abdomen height, is cumbersome and not practical because it has four attachments with a fixed angle of 90 ° between the shoulder belt portion and the abdominal belt portion which does not allow the two elements of the closure device to assume a neat and linear position on the sides of the back when they are disengaged.

It would also be suitable only for two-seater cars because of the space created by the bars behind the backrest.

### DISCLOSURE OF INVENTION

The reason of the present invention é the possibility to realize a more simplified and not bulky device, of four-point harnesses to the chassis of the car, of the double-shoulder and abdominal type and that also improves the ease of use and comfort of the occupants.

The restraint system of the present invention is intended to replace in an improved manner the functions of the single three-point belt currently used, in the classic configuration called a sling or delta, which diagonally covers the shoulder-to-hip torso and horizontally the sub-abdominal area.

The divulged shapes of carrying out of the invention supply a safety belts system at four anchorage points to the loom of the car for the deduction of the occupants of the vehicle.

The system employs two distinct belts, of the double-shoulder and abdominal type, which extend from two different points of a flat reticular truss with also vertical elements (vertical members), perpendiculars to the rail of truss, for example of type Pratt or Hove, placed between two uprights of the car close to the seats. The belts go down, then, long the front of the backrest until reaching the seat, flow to the sides of the seat itself and continue to the car floor where they are anchored.

In the configuration closed the belts they extend from two different points of the truss, converge at the center of the lower abdomen of the occupant, pass through the slot of the buckle disk-ring and tongue disk-ring, continue specularly and horizontally towards the opposite sides of the seat and arrive at the floor where they are anchored.

To pass from the open configuration to the closed configuration, the two belts are extracted from the occupant and united in the middle of the lower abdomen with the tongue and buckle.

The two belts thus extracted longitudinally cover the occupant's torso from shoulders to the abdomen and horizontally the lower abdomen from side to side.

Both belts integrate, respectively:
a first anchor ring located at the end of each belt;
a second and particular disk that encircles and flows on them, in both the senses, long each one of two respective extracted belts.

Two above-mentioned sliding rings supplement, in turn and respectively, a tongue and a buckle.

To pass from the open configuration to the closed configuration, the two belts are extracted from the occupant and joined at the center of the lower abdomen through the tongue and the buckle. The two belts thus extracted longitudinally cover the occupant's torso from shoulders to sub-abdomen and horizontally the lower abdomen from side to side.

This configuration improves forward passenger retention by correctly distributing forces applied to the occupant's body during rapid deceleration and / or impact conditions.

If, for example, the vehicle decelerates linearly until it stops completely, the restraint system allows the upper part of the passenger torso to be locked linearly and simultaneously on both shoulders and the deceleration forces on this upper part of the torso are halved.

The closing system of this configuration encourages the use of belts because it allows you to connect the two belts with a single click without having to look. The passenger, in fact, moves the two straps over his shoulders and joins the buckle and tongue that are on the sides of the seat.-

The system in the detail consists of typical seat used in the motor-vehicles includes a generic backrest [fig. 1 (18)] which extends between an upper portion and a lower portion and a seat supporting the seated person [fig. 1 (36)].

Two retractors, containing each one a bobbin, containing a retractile belt, installed one on top the other, in slightly decentralized mode not to hinder the belt of the retractors placed lower to extend in height [fig. 1e 2 (1; 2)]; or one beside other if space allows it, to the base of the upright or of the uprights of the car, close to the seat of interest, where the retractors of the three-point belts are currently housed [fig. 1-2 (1; 2)].

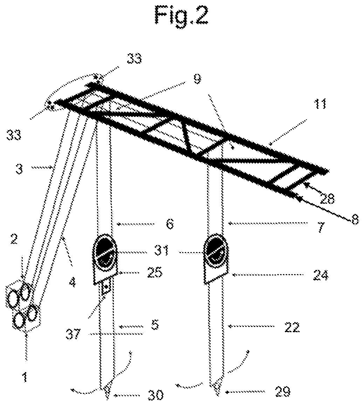

Two belts spread in long parallel and vertical way the central upright, exactly like the single three points belt [fig. 1 and 2 (2; 3)].

The belts, in this case, do not come out of protector carter slot of where they go out in the three points configuration but they continue their path up to the extreme apex of the upright [fig.1 (10)] and continue their path, horizontally, along the superior back of a particular reticular truss positioned in a flat manner, which spreads, on measure, from peak to other central uprights of the car, where it can be welded or bolted or riveted or jammed [fig. 1 and 2 (11)].

This particular reticular truss will must to have also vertical connection elements, or, perpendiculars to the rails [fig. 2 (28)], (for example type Hove or Pratt).

This conformation, thanks to the vertical / perpendicular elements [fig. 2 (28)] to the rails [fig. 2 (8), it allows to the couple of belts to come out, without torsion, from the blanks of the same one [fig. 2 (9) and continue their run towards the bottom, along the backrest [fig. 1 (18)] where the back is resting, where it rests the back of the occupant, to reach the floor of the car where they will be anchored to the two sides of the seats [fig. 1 (16; 20; 23; 26)].

It is preferable that the truss is realized on measure when the most possible was following also the internal lines of the roof between the right upright and the left upright, to limit the bulk and the aesthetic impact as much as possible. A conformation that follows, where present time, the natural curvature towards the high one of the roof of the car improves also the resistance to the traction towards the bottom derived at the tension of the belts.

A first belt extracted integrates:
a ring of anchorage positioned at the external apex of the belt [fig. 2 (29)],
a buckle or tongue device [fig. 1 and 2 (24)] which integrates a revolving disk / ring that encircles and flows, in both the senses, long the extracted belt [fig. 2 (31)].

On the two-seat front and rear cars, it is preferable that the belt that integrates the buckle device is that one more internal / central to the passenger compartment, to maintain the position today in use.

A second belt extracted integrates:
a ring of anchorage positioned at the outer end of the belt [fig. 2 (30)], a buckle or tongue device [fig. 2 (25; 27)] which integrates a revolving disk/ring that encircles and flows, in both the senses, long the extracted belt [fig. 2 (31)].

On the two-seat front and rear cars, it is preferable that the belt that integrates the tongue device is that one more external closer to the upright in question, to maintain the position today in use.

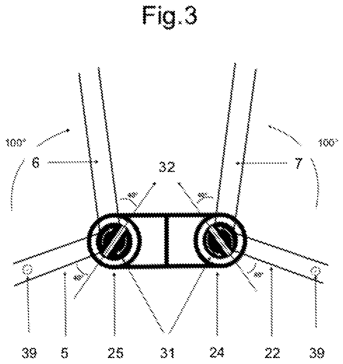

Both the buckle and the tongue take the best position in every position thanks to the adoption of particular integrated disk / rings that can rotate independent and concentric mode respectively to the position taken by the buckle and / or tongue [fig. 2 and 3 (31)].

The topic is detailed in the implementation method.

In the open configuration, a first belt [fig. 1 and 2 (4), in particular the one that runs inside more inside the carter of the same upright [fig.1 (27)], continues its path upwards, along, reaches the extreme peak of the upright [fig. 1 (10)] where there continues his horizontally long run the back of the reticular truss [fig. 1; 2 (11)] until the first shoulder of the occupant is longitudinally reached. Reached the position overlying the first shoulder of the possible occupant, that is the nearest to the upright in question, comes out through the blanks of the truss [fig. 2 (9)], it continues its path downwards, along the front part of the backrest closest to the upright in question [fig.1 (14)] continues the path following the respective side of the seat [fig.1 (17)] and reaches the floor where is anchored with adequate hardware [fig.1 (16)].

A second belt [fig. 1 and 2 (3)], in particular the one that flows more exterior flowing inside of the carter of the upright itself [fig. 1 (27)] continues its path upwards, along, reaches the extreme peak of the upright [fig. 1 (10)], where continues his long run the back of the reticular truss, overhanging for a while the most internal first belt [fig. 2 (4)], until you reach longitudinally the second shoulder of the possible occupant.

Reached overlying position the second shoulder of the possible occupant, the most faraway to the upright in question, comes out through an other blanks of the reticular truss [fig. 2 (9)], it continues its path downwards, along the front part of the backrest further to the upright in question [fig. 1 (13)], continues the path following the respective side of the seat [fig.1 (19)] and reaches the floor where is anchored with adequate hardware [fig.1 (20)].

As already anticipated, in each of the two shoulder belts flow respectively two rings /disks integrated to the respective two components of the system of closing, buckle and tongue.

The rings run up and down along the belts, in both directions.

To fasten the belts, place them over the shoulders of the occupant, pull the buckle and tongue on the sides of the seat, in order to extract further tape, and join them horizontally along the abdomen.

In the closed conformation, the shoulder belts converge towards the abdomen where they are joined by the buckle device.

The belts, passing through two respective revolving and sliding rings integrated to the buckle element and tongue element, they extend specularly from the center of the sub-abdomen towards the opposite sides of the occupant, creating a third horizontal belt at sub-abdominal height.

This closed configuration has an aspect similar to a X.

In the low part of the belts, at seat level, under the sliding rings, are inserted end-of-stroke rivet buttons to prevent the buckle and tongue from sliding down when the belts are not joined.

This allows you to always have the locking device close at hand without having to look.

This conformation is easy to use and non-invasive aesthetically. It is easy to install and does not require major redesign because it takes advantage of current vehicle layouts. It is totally anchored to the chassis of the car to comply with current very restrictive regulations.

### BRIEF DESCRIPTION OF DRAWINGS

Fig. 1 = car section: device configuration representation Fig. 2 = truss detail
Fig. 3 = belts detail in closed position
Fig. 4 = exploded buckle element closing device
Fig. 5 = exploded element tongue closing device

1) Retractor
2) Retractor
3) Belt
4) Belt
5) Abdomen belt portion
6) Bust portion belt
7) Bust portion belt
8) Truss rail
9) Blank of truss
10) Vertex of uprights
11) Truss
12) Car chassis
13) Portion more internal backrest
14) Portion more internal backrest
15) Tongue portion of closing device
16) Anchor point to the vehicle floor
17) Sitting side
18) Backrest
19) Sitting side
20) Anchor point to the vehicle floor
21) Buckle portion of the closing device
22) Abdomen belt portion
23) Anchor point to the vehicle floor
24) Buckle portion of the closing device
25) Tongue portion of closing device
26) Anchor point to the vehicle floor
27) Protection carter
28) Vertical elements of the truss
29) Belt ring for anchoring to the floor
30) Belt ring for anchoring to the floor
31) Rotating rings of the closing device
32) Belt pass slot
33) Anchoring points of the truss to the upright
34) Housing for rotating disc
35) Belt pass slot
36) Seat
37) Tongue
38) Release lever
39) Riveted buttons

### BEST MODE FOR CARRYING OUT THE INVENTION

The same numeration of the components adopted in the drawings will be used to describe the accomplishment method. In the next description of the method of accomplishment, the operative parameters and the components are described like examples and they do not intend to be bounding.

In the detail, the favorite configuration fig. 1, foresees that a typical seat used in the motor-vehicles includes a generic backrest [fig.1 (18)] which extends between an upper portion and a lower portion and a seat supporting the seated person [fig. 1 (36)].

Two retractors independent, of the known type used in the current three-point belts, preferably mounted in column mode, one over other, lightly decentralized not to hinder the belt of the retractor placed lower down to extend in height [fig. 1e 2 (1; 2)]; or placed side by side if space allows it, at the base of each upright in question, containing each a bobbin containing a single retractile belt including an inertial locking mechanism which normally allows the tapes to be released against the action of the retracting take-up spring, but which locks in the event of sudden deceleration of the vehicle sensed by a deceleration detection device. The two distinct extracted belts from retractors [fig. 1e2 (3; 4)] extend inside the carter [fig. 1 (27)] in height along the upright beside the seat in question, until to reach the peak of the upright same.

Between the uprights vertex [fig. 1 (10)] the reticular truss is installed.

The truss can be fixed to the uprights [fig. 2 (33)] using suitable welding systems already known to the art or riveted using components of adequate solidity or bolted using suitable fastness bolts.

The reticular girder will be preferably but not necessarily of the type Hove or Pratt or similar provided that there are present vertical alternate elements compared to the rails [fig. 2 (28)].

The thickness of the rails [fig. 2 (8)] and vertical and diagonal alternate elements (vertical and / or diagonal alternating elements) of the truss will be established in relation to the choice of the material of which they will be composed, in order to obtain characteristics of adequate solidity to withstand the tensile forces developed by the belts on the bar itself.

The blanks of truss [fig. 2 (9)] they must be sufficiently wide to allow the passage of integrated components to the belts as the anchor rings to the car floor [fig. 2 (29; 30)] and the closing device [fig2 (24; 25)], or rather, the elements of the device of closing that supplement the tongue [fig. 2 (37)] and the buckle [fig. 2 (24)].

The line of truss [fig. 1 and 2 (11)] will be preferably but not necessarily similar to the line of the roof for the most possible threshold the aesthetic encumbrance.

The first one and the second belt [fig. 1 (3; 4)] arrived on the peak of the upright of the reticular truss [fig. 1e 2 (11)] continue, independently, their path along the upper back put into plan between two uprights [fig. 1 (10)] Referring to the drawings and in particular to the open configuration fig.1, an embodiment of a vehicle occupant restraint system with the use of four-point safety belts.

It includes a first extracted belt [fig. 1 (6)] it extends downwards, through one of blanks of the reticular truss [fig. 1 and 2 (9)] that corresponds longitudinally to the side of the backrest closer to the upright in question [fig. 1 (14)], extends downwards along the backrest, continues downwards of the respective side of the seat [fig.1 (17)], to the floor of the vehicle where it is anchored next to the seat [fig.1 (16)].

It includes a second extracted belt [fig. 1 (7)] it extends downwards, through a blanks of the reticular truss [fig. 1 and 2 (9)] that corresponds longitudinally to the side of backrest farther to the upright in question [fig. 1 (13)], extends downwards along the backrest, continues downwards of the respective side of the seat [fig. 1 (19)], to the floor of the vehicle where it is anchored next to the seat [fig. 1 (20)].

Referring to the drawings, in the closed configuration Fig.1, an embodiment of a vehicle occupant restraint system with the use of four-point safety belts.

It includes a first extracted belt [fig. 1 (6)] it extends downwards, through another blanks of the truss [fig. 1 and 2 (9)] witch corresponds longitudinally to the side of the backrest closer to the upright in question [fig. 1 (14)], continue downwards along the backrest, converge to the low center of the back where it passes through the slot of the revolving disk/ring [fig. 3 and 5 (32)] integrated to the tongue element of the sliding locking device [fig 1; 2; 3 (25)], continues horizontally towards the closer side to the upright in question [fig. 1 (5)] and continues downwards alongside the seat to the car floor where it is anchored [fig. 1 (26) close to base of the seat.

It includes a second extracted belt [fig. 1 (7)] which extends downwards through a another blanks of the truss [fig. 1 and 2 (9)] witch corresponds longitudinally to the side of the backrest farther to the upright in question [fig. 1 (13)], continue downwards along the backrest, converge to the low center of the back where it passes through the slot of the revolving ring/disk [fig. 3 and 5 (32)] integrated to the element buckle of the of sliding locking device [fig. 1; 2; 3 (24)], continues horizontally towards the farther side to the upright in question [fig. 1 (22)] and continues downwards alongside the seat to the car floor where it is anchored [fig. 1 (23)] close to the base of the seat.

A ring runs in each belt extracted [fig. 2; 3; 4; 5 (31)] integrated to one of two parts of closing device, tongue [fig. 1 and 2 (25)] and buckle [fig. 1 and 2 (24)]. The sliding ring of the belt closer to the upright integrates preferably the component tongue, to maintain the present position today in use.

The fluent ring of the most faraway belt to the upright supplements preferably the component female, or the buckle, to maintain the current position in use today.

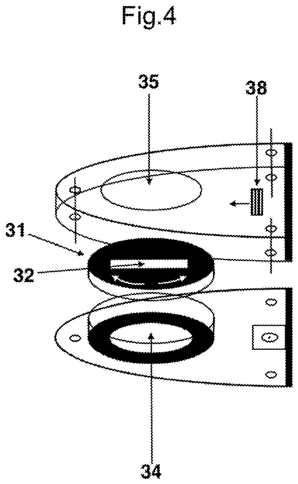

The belts, as we can see, adopt a special closing device composed of a buckle element and a tongue element which integrate, both, not fixed but revolving pass belt disk/ring. The ring consists in a revolving disk with slot passes belt which allows the buckle and the tongue of rotating on the same axis in concentric way of 360th one in both directions [fig. 2; 3 (24; 25)] and fig. 4 and 5.

The adoption of a system of closing with rings/disks passes belt auto adjustable allow to the belts run and spread easily during their extraction andkeep the correct angle when the belts are fastened. The rings, in fact, assume automatically the ideal angle regardless of the position taken by the buckle and the tongue.

In the closed configuration the position of slot passes belt depends on the corner included between the belt of shoulder and the part of abdominal belt, in closed position, that é of about 100° [fig. 3].

It is specified that the exact position of the buckle and of the tongue depends on different factors like the conformation of the seats, the conformation of the abdomen and of the cosce of the occupant and also on the encumbrance of the clothes used by the occupant. The axis slot of the rings it will then assume an angle of about 40 ° respect to the two split belt portions when they are fastened [fig. 3].

A device example with adjustable rings foresees the adoption of two coupled frames which integrates tongue or buckle preferably of the type already well-known and adopted in the seat belts for current motor-vehicles but appropriately modified to integrate also the revolving rings [fig. 4 and 5].

To go from the open configuration to the closed configuration, the occupant must move two belts, already in tension, over the back thorax zone and join the two respective elements of the closure (tongue and buckle) at the center of the lower abdomen that are on the two sides of the seat.

Two stop riveted buttons [fig. 3 (39)] are integrated in two respective belts, at sitting height.

The stop rivet buttons allow to the tongue and to the buckle to stay at the of seat level to allow the occupant to identify them immediately without looking. Two shoulder belts passing through the respective rings of the buckle and of the tongue, go on specularly and horizontally towards the opposite sides of the occupant and cover the entire area of the lower abdomen [fig. 1 and 3 (5; 22)].

This closed configuration presents a particular geometry similar to a X, in all that two belts come out at two different points of the reticular truss and converge towards the low abdomen of the occupant then to spread horizontally and specularly towards the opposite sides of the occupant.

## Claims

1. A device for retaining the occupant of a vehicle seat during braking and / or impact, more particularly a retractable type of safety belt assembly, with four anchor points to the frame associated with a backrest extending between an upper and a lower part and a seat cushion extending between an inner and outer side and comprising in connected mode:
a first portion of a retractable shoulder belt (6) of which one end protrudes from a single belt retractor (1)
anchored to the vehicle frame, which extends from
a first shoulder of the occupant and converges to the center of the lower abdomen;
a second portion of a retractable shoulder belt (7) of which one end protrudes from a single belt retractor (2)
anchored to the vehicle frame, which extends from
the second shoulder of the occupant and converges to the center of the lower abdomen;
a first portion of a retractable abdominal belt (5) anchored to the vehicle frame, which extends horizontally from one of the occupant's hips to the center of the lower abdomen;
a second portion of a retractable abdominal belt (22) anchored to the vehicle frame, which extends horizontally from the other side of the occupant to the center of the lower abdomen;
a closure system with a single buckle (24) and a single tongue (25) for the interconnection of the portions abdominal belts and portions shoulder belts;
all the portions belts that converge at the center of the lower abdomen are joined by the closure system with the single buckle and the single tongue;
it can adopt only two retractors (1), (2), installed to column mode, one on top of the other, or side by side fi space allows it, at the base, but not necessarily, of the vertical upright adjacent the seats, in slightly decentralized mode not to hinder the passage of the belt of the retractor placed lower to extend in height and containing each one, a single extractable independent belt wrapped in a single spool;
the device is **characterized by** a reticular truss (11)
that has vertical and diagonal elements to its rails (8), for example of the type Hove or Prat or similar, installed between peaks (10) of a right and left upright
where the retractors are installed and whose diagonal and vertical elements are sufficiently distanced to allow the passage of the belts and of the integrated elements, anchor rings (29, 30) tongues (25) and buckles (24), through the blanks of
the reticular truss (9).

2. Device according to claim 1, wherein the reticular truss imitates as much as possible the
curvatures of the internal roof, to limit the space as much as possible of encumbrance.

3. Device according to claim 1or 2, wherein the reticular truss is welded or bolted or riveted or jammed on the peaks (10) of the two uprights.

4. Device, according to one of claims 1 to 3 , in disconnected mode, **characterized in that** the first extracted belt, from the respective retractor and his integrated elements, fixing ring and buckle or tongue, goes through the blanks
of reticular truss that dominates the shoulder of the backrest upright (14) closer to the upright, extends downwards, lapping on the front shoulder of backrest closer to the upright, reaches the seat (36), goes down lapping on the side of the seat (36)
closer to the upright in question and arrive at the car
floor where it is anchored (16) by bolts.

5. Device, according to one of claims 1 to 4, in disconnected mode, **characterized in that** the second extracted belt from the respective retractor and his integrated elements, fixing ring and buckle or tongue, goes through another blanks of reticular truss that dominates the shoulder of the backrest (13) further from the upright, extends downwards, lapping on the front shoulder of backrest further from the upright in question, reaches the seat (36), extends downwards goes down lapping on the side of the seat (19) further from the upright and arrive at the car floor where ti is anchored (20) by bolts.

6. Device, according to one of claims 1 to 5, consisting of a closing system composed of two elements, the male element represented by the ring pass belt with tongue (25) and the female element represented by the ring pass belt with buckle (24), **characterized in that** both, in a distinct manner, encircle and slide in both directions in each one of two different belts.

7. Device according to the claim 6 consisting of a closing system composed of two elements, the male element represented by the ring passing the belt with tongue and the female element represented by the ring passing the belt with buckle **characterized by** the fact that both the two elements of the device, element tongue (25) and element buckle (24) integrate a ring - disk pass belt (31) that it rotates in concentric manner compared to the tongue and / or the buckle inside the device, allowing to the slot pass belt (32) to automatically assume the ideal intermediate position which allows an easy shoulder-abdomen deployment of the belt during the extraction and closure phase.

## Patentansprüche

1. Eine Vorrichtung zum Festhalten des Insassen eines Fahrzeugsitzes während Bremsen und/oder Aufprall, insbesondere ein einziehbar Sicherheitsgurt Montage mit vier Ankerpunkten am Rahmen, der mit einer Rückenlehne verbunden ist sich zwischen einem Ober- und einem Unterteil erstreckt und ein Sitzpolster erstreckt zwischen einer Innen- und Außenseite und im verbundenen Modus Folgendes umfasst: einen ersten Abschnitt eines einziehbaren Schultergurts (6), von dem ein Ende hervorsteht aus einem einzelnen Gurtaufroller (1)
am Fahrzeugrahmen verankert, der sich von dort erstreckt eine erste Schulter des Insassen und läuft zur Mitte der unteren zusammen Abdomen;
einen zweiten Abschnitt eines einziehbaren Schultergurts (7), von dem ein Ende hervorsteht aus einem einzelnen Gurtaufroller (2)
am Fahrzeugrahmen verankert, der sich von dort erstreckt die zweite Schulter des Insassen und läuft in der Mitte der unteren Schulter zusammen Abdomen;
einen ersten Abschnitt eines einziehbaren Bauchgurts (5), der am Fahrzeug verankert ist Rahmen, der sich horizontal von einer Hüfte des Insassen bis zur Hüfte erstreckt Mitte des Unterbauchs;
einen zweiten Abschnitt eines einziehbaren Bauchgurts (22), der am Fahrzeug verankert ist Rahmen, der sich horizontal von der anderen Seite des Insassen zur anderen erstreckt Mitte des Unterbauchs;
ein Verschlusssystem mit einer einzelnen Schnalle (24) und einer einzelnen Zunge (25) für die Verbindung der Teile Bauchgurte und Teile Schultergurte;
Alle Teile des Gürtels, die in der Mitte des Unterleibs zusammenlaufen, sind Verbunden durch das Verschlusssystem mit der Einzelschnalle und dem einzelne Zunge;
es können nur zwei Gurtaufroller (1), (2) verwendet werden, die im Säulenmodus installiert sind, einer davon Übereinander oder nebeneinander, wenn der Platz es zulässt, an der Basis, aber nicht notwendigerweise, von der vertikalen Stütze neben den Sitzen, in leicht dezentralisierter Form Modus, der den Durchgang des Gurtes des tiefer platzierten Gurtaufroller nicht zu behindern Erweitern Sie die Höhe und enthalten Sie jeweils ein einzelnes, ausziehbares, unabhängiges Teil Gürtel auf einer einzigen Spule gewickelt;
die Vorrichtung zeichnet sich durch ein netzförmiges Fachwerk (11) aus das zu seinen Schienen (8) vertikale und diagonale Elemente aufweist, beispielsweise der Typ Hove oder Prat oder ähnlich, installiert zwischen den Spitzen (10) einer rechten und einer linken aufrecht
wo die Gurtaufroller installiert und das diagonale und vertikale Elemente in Bezug auf die Schienen aufweist, die ausreichend distanziert sind, um den Durchgang der Gurte und integrierten Elemente, das heißt, Ankerringe (29,30) mit Lasche (25) und Schnallen (24), durch die Hohlräume des Fachwerks selbst zu ermöglichen (9);

2. Vorrichtung nach Anspruch 1, wobei das retikuläre Fachwerk imitiert so viel wie möglich Krümmungen des Innendachs, um die Gesamtabmessungen so gering wie möglich zu halten.

3. Vorrichtung nach Anspruch 1 oder 2, wobei das netzförmige Fachwerk an den Spitzen (10) der angeschweißten oder angeschraubten oder angenieteten oder verklemmten zwei Pfosten.

4. Vorrichtung nach einem der Ansprüche 1 bis 3,
im offen Modus, **dadurch gekennzeichnet, dass** der erste aus dem jeweiligen Gurtaufroller herausgezogene Gurt und seine integrierten Elemente, Befestigungsring und Schnalle oder Zunge, durch einen leeren Raum im Gitter geführt Fachwerk, der über der Schulter der Rückenlehne (14) liegt näher an der Pfosten, streckt sich nach unten und leckt die vordere Schulter des
Die Rückenlehne nähert sich dem Pfosten, erreicht den Sitz (36), senkt sich ab und überlappt die Seite des Sitzes (36).
Nähern Sie sich der betreffenden Stange und erreichen Sie den Boden des Fahrzeugs, wo sie mit den Bolzen (16) verankert wird.

5. Vorrichtung nach den Ansprüchen 1 bis 4, im offenen Modus, **dadurch gekennzeichnet, dass** der zweite aus dem jeweiligen Gurtaufroller herausgezogene Gurt und seine integrierten Elemente, das heißt, Befestigungsring und Schnalle oder Zunge, durch einen leeren Raum im Gitter geführt Fachwerk, das über der Schulter der Rückenlehne (13) liegt, die am weitesten vom Pfosten entfernt ist, sich nach unten erstreckt, die vordere Schulter der Rückenlehne berührt, die am weitesten vom Pfosten entfernt ist, den Sitz (36) erreicht, sich nach unten fortsetzt und die Seite des Sitzes berührt ( 19) weiter entfernt als der Stange und erreicht den Boden, wo er mit geeigneten Bolzen verankert (20) wird.

6. Vorrichtung nach einem der Ansprüche 1 bis 5, bestehend aus einem Verschlusssystem, das aus zwei Elementen besteht, dem männlichen Element, dargestellt durch einen Ring mit einer Zunge, durch den ein Gürtel (25) verläuft, und dem weiblichen Element, dargestellt durch ein Ring mit Schnalle, durch den der andere Gürtel (24) verläuft, **dadurch gekennzeichnet, dass** beide die Gürtel umschließen und in beide Richtungen in die Gürtel gleiten.

7. Vorrichtung nach Anspruch 6, bestehend aus einem Verschlusssystem bestehend aus zwei Elementen, dem männlichen Element, dargestellt durch den Ring mit Zunge, durch den ein Gürtel verläuft, und dem weiblichen Element, dargestellt durch den Ring mit Schnalle, durch den der andere hindurchgeht Gürtel, **dadurch gekennzeichnet, dass** beide Elemente der Vorrichtung, das Zungenelement (25) und das Schnallenelement (24), einen Scheibenring integrieren, durch den die Riemen (31) verlaufen und der sich konzentrisch zur Zunge und/oder zur Schnalle dreht Dadurch kann der Scheibenschlitz (32) automatisch die ideale Zwischenposition einnehmen, die eine einfache Schulter-Bauch-Entfaltung des Gürtels während der Extraktions- und Schließphase ermöglicht.

## Revendications

1. Dispositif pour retenir l'occupant d'un siège de véhicule pendant freinage et/ou choc, plus particulièrement une ceinture de sécurité de type escamotable assemblage, avec quatre points d'ancrage au châssis associés à un dossier s'étendant entre une partie supérieure et une partie inférieure et un coussin de siège s'étendant entre un côté intérieur et extérieur et comprenant en mode connecté:
une première partie d'une ceinture épaulière rétractable (6) dont une extrémité fait saillie à partir d'un seul enrouleur de ceinture (1)
ancré au châssis du véhicule, qui s'étend de
une première épaule de l'occupant et converge vers le centre du bas abdomen;
une seconde partie d'une ceinture épaulière rétractable (7) dont une extrémité fait saillie à partir d'un seul enrouleur de ceinture (2)
ancré au châssis du véhicule, qui s'étend de
la deuxième épaule de l'occupant et converge vers le centre de la partie inférieure abdomen;
une première partie d'une ceinture abdominale rétractable (5) ancrée au véhicule cadre, qui s'étend horizontalement depuis l'une des hanches de l'occupant jusqu'au centre du bas ventre;
une seconde partie d'une ceinture abdominale rétractable (22) ancrée au véhicule cadre, qui s'étend horizontalement de l'autre côté de l'occupant jusqu'au centre du bas ventre;
un système de fermeture à une seule boucle (24) et une seule languette (25) pour le
interconnexion des parties de ceintures abdominales et des parties de ceintures d'épaule ;
toutes les portions de ceintures qui convergent au centre du bas ventre sont rejoint par le système de fermeture avec la boucle unique et le une seule langue;
il ne peut adopter que deux rétracteur (1), (2), installés en mode colonne, l'un sur l'autre, ou côte à côte, si l'espace le permet, à la base, mais pas nécessairement, du montant vertical adjacent aux sièges, de manière légèrement décentralisée mode pour ne pas gêner le passage de la ceinture de l'enrouleur placé plus bas que s'étendre en hauteur et contenant chacun, un seul extractible indépendant ceinture enveloppée dans une seule bobine ;
le dispositif est **caractérisé par** une ferme réticulaire (11) qui comporte des éléments verticaux et diagonaux sur ses rails (8), par exemple du type Hove ou Prat ou similaire, installé entre les sommets (10) des montant droite et gauche droit où sont installés les rétracteur et dont les diagonales et verticales les éléments sont suffisamment espacés pour permettre le passage des courroies et des les éléments intégrés, anneaux d'ancrage (29, 30), languettes (25) et boucles
(24), à travers les espaces vides de
le treillis (9).

2. Dispositif selon la revendication 1, dans lequel le treillis réticulaire imite autant que possible le
courbures de la toiture intérieure, pour limiter au maximum l'espace de encombrement.

3. Dispositif selon la revendication 1 ou 2, dans lequel le treillis est soudé ou boulonné ou riveté ou coincé sur les sommets (10) du
deux montants.

4. Dispositif, selon l'une des revendications 1 à 3 ,
en mode déconnecté, **caractérisé**
**par le fait que** la première ceinture extraite, du rétracteur respectif et de son éléments intégrés, anneau de fixation et boucle ou languette, traverse les espaces vides de treillis réticulaire qui domine l'épaule du montant du dossier (14) plus près du montant, s'étend vers le bas, chevauchant l'épaule avant du le dossier se rapproche du montant, atteint l'assise (36), descend en rodant sur le côté du siège (36)
rapprochez vous du montant en question et arrivez à la voiture sol où il est ancré (16) par des boulons.

5. Dispositif, selon l'une des revendications 1 à 4, en mode déconnecté, **caractérisé par le fait que** la deuxième courroie extraite du support respectif rétracteur et ses éléments intégrés, anneau de fixation et boucle ou languette, traverse un autre espace vide de treillis réticulaire qui domine l'épaule du dossier (13) plus éloigné du montant, s'étend vers le bas en chevauchant le l'épaule avant du dossier, la plus éloignée du montant en question, atteint le siège (36), s'étend vers le bas descend en chevauchant sur le côté du siège (19) plus loin du montant et arrivez à la voiture sol où il est ancré (20) par des boulons.

6. Dispositif, selon l'une des revendications 1 à 5, constitué d'un système de fermeture composé de deux éléments, l'élément mâle représenté par l'anneau, avec languette, à travers lequel passe la ceinture, (25) et l'élément femelle représenté par l'anneau, avec boucle, à travers lequel passe la ceinture, (24), **caractérisée par le fait que** les deux, dans un manière distincte, encercler et glisser dans les deux sens dans chacune des deux différentes ceintures.

7. Dispositif selon la revendication 6 constitué d'un système de fermeture composé de deux éléments, l'élément mâle représenté par l'anneau avec languette, par lequel passe la ceinture et l'élément femelle représenté par l'anneau, avec boucle, par lequel passe la ceinture, **caractérisé par le fait que** les deux éléments du dispositif, élément de languette (25) et élément de boucle (24), intègrent un disque-anneau, à travers lequel passe la ceinture (31) qui tourne de manière concentrique par rapport à la languette et/ ou la boucle à l'intérieur du dispositif, permettant à la fente du disque à travers laquelle passe la ceinture (32) de prendre automatiquement la position intermédiaire idéale qui permet un déploiement épaule-abdomen facile de la ceinture pendant la phase d'extraction et de retrait.
